# EUROPÄISCHE PATENTANMELDUNG

(11) **EP 4 759 637 A1**
(43) Veröffentlichungstag der Anmeldung: **17.06.2026**
(21) Anmeldenummer: 25222289.8
(22) Anmeldetag: 10.12.2025
(51) Int. Cl.: B60R 9/10

(54) **ZWEIRADTRÄGER**

(30) Priorität: 10.12.2024 AT 509772024
(71) Anmelder: Falch, Benjamin, 6572 Flirsch (AT)
(72) Erfinder: Falch, Benjamin, 6572 Flirsch (AT)
(74) Vertreter: Schwarz & Partner Patentanwälte GmbH

(57) **Zusammenfassung**

Zweiradträger zum Transport von zumindest einem einspurigen Zweirad, umfassend ein Grundprofil (1), welches vorzugsweise einen U-förmigen oder V-förmigen Querschnitt aufweist und mit einem einspurigen Zweirad, bevorzugt Fahrrad oder Elektrofahrrad, beladbar ist, einen Grundrahmen (2), welcher mit dem Grundprofil (1) verbindbar ist, einen ersten Bügel (4), welcher an einem ersten Enden des Grundprofils (1) angeordnet ist, einen zweiten, spannseitigen Bügel (5), welcher an einem zweiten Ende des Grundprofils (1) angeordnet ist und welcher verstellbar oder schwenkbar, und ein Befestigungssystem, welches mit dem Grundrahmen (2) verbunden ist und mit einem Fahrzeug koppelbar ist, dadurch gekennzeichnet, dass zumindest der spannseitige Bügel (5) schwenkbar mit dem Grundprofil (1) und einem am Grundprofil (1) angeordneten pneumatischen Verstellelement (3) oder elektrischen Verstellelement verbunden ist, wobei beim Einschwenken des spannseitigen Bügels (5) das pneumatische Verstellelement (3) oder elektrische Verstellelement derart Kraft auf den spannseitigen Bügel (5) ausübt, dass das Fahrrad über das Grundprofil (1) und die beiden Bügel (4, 5) an zumindest vier Einspannpunkten einspannbar und sicherbar ist.

## Beschreibung

Die vorliegende Erfindung betrifft einen Zweiradträger zum Transport von zumindest einem einspurigen Zweirad, umfassend ein Grundprofil, welches vorzugsweise einen U-förmigen oder V-förmigen Querschnitt aufweist und mit einem einspurigen Zweirad, bevorzugt Fahrrad oder Elektrofahrrad, beladbar ist, einen Grundrahmen, welcher mit dem Grundprofil verbindbar ist, einen ersten Bügel, welcher an einem ersten Enden des Grundprofils angeordnet ist, einen zweiten, spannseitigen Bügel, welcher an einem zweiten Ende des Grundprofils angeordnet ist und welcher verstellbar oder schwenkbar, und ein Befestigungssystem, welches mit dem Grundrahmen verbunden ist und mit einem Fahrzeug koppelbar ist. Weiters betrifft die Erfindung ein Verfahren zum Transport von zumindest einem einspurigen Zweirad.

### HINTERGRUND DER ERFINDUNG

Das Bewusstsein für umweltbewusstes und gesundheitsorientiertes Leben steigt momentan und damit auch das Verlangen nach möglichst umweltbewussten, gesundheitsorientierten und flexiblen Freizeitaktivitäten. Eine derartige Freizeitaktivität, welche diese Eigenschaften verbindet und dementsprechend stark an Beliebtheit gewonnen hat, ist das Radfahren. Um diese Leidenschaft auch außerhalb des gewohnten Wohnumfeldes auszuleben oder um neue und entfernte Regionen zu erkunden, wird eine Transportmöglichkeit für das Fahrrad benötigt. Eine Möglichkeit hierfür bietet ein Zweiradträger, welcher es ermöglicht, sowohl Gepäck für den Ausflug als auch das eigene Fahrrad zu transportieren

Im Stand der Technik sind diverse Zweiradträger beschrieben. Ein auf einem Dachträger montierbarer Zweiradträger ist in dem Dokument US 5,833,074 A offenbart. Der Zweiradträger umfasst eine Grundprofil, welche in Fahrzeuglängsrichtung bzw. senkrecht zu Dachträgern montiert ist, und zwei Halterungen, welche jeweils an den beiden Enden der Grundprofil angeordnet sind. Die beiden Halterungen sind in der Form eines umgekehrten "U" an der Grundprofil montiert und zumindest eine Halterung ist schwenkbar mit der Grundprofil verbunden. Die Schwenkung ist dabei über einen Spannmechanismus steuerbar. Durch die Halterungen sind die Räder eines Fahrrades einklemmbar und somit ist das Fahrrad gesichert.

Zweiradträger, welche an der Rückseite des Fahrzeugs anbringbar sind, werden in den Dokumenten DE 10 2022 108 057 A1 und WO 2020/044154 A1 beschrieben. In dem Dokument DE 10 2022 108 057 A1 wird ein Zweiradträger, welcher ein Befestigungssystem zum Befestigen des Zweiradträgers an einem Fahrzeug, einen ersten und zweiten Lastenträger und zumindest einen Lastarm umfasst. Mittels erstem Lastenträger und Lastarm, welcher schwenkbar mit dem ersten oder zweiten Lastenträger verbindbar ist, kann ein Fahrrad gesichert werden. Die schwenkbare Verbindung zwischen Lastarm und Lastenträger ist unter anderem über eine Kabelgruppe möglich. Ein Betätigungsbauteil kann die Kabelgruppe derart verriegeln, dass das Fahrrad im Bereich der Räder gesichert ist.

Der in WO 2020/044154 A1 gezeigte Zweiradträger nutzt, einen Ratschenmechanismus, um den Sperrarm mit der Basis schwenkbar zu verbinden.

Ein weiterer Zweiradträger, welcher an der Rückseite des Fahrzeugs anbringbar ist und eine Grundprofil drehbar oder schwenkbar mit zumindest einer Zugstange verbindet, ist in CN 211969319 U offenbart. Die drehbare oder schwenkbare Verbindung wird hierbei durch eine hydraulische Vorrichtung ermöglicht.

Bei den zuvor genannten Zweiradträgern muss die Bügel gesondert in einem Zwischenschritt an der gewünschten Position befestigt werden, wodurch sich ein erhöhter Zeitaufwand ergibt und die Sicherung eines Fahrrades auf einem Zweiradträger erschwert ist.

### KURZBESCHREIBUNG DER ERFINDUNG

Ausgehend von den Nachteilen des Stands der Technik liegt der gegenständlichen Erfindung die Aufgabe zugrunde, einen Zweiradträger bereitzustellen, welcher eine einfache und schnelle Befestigung eines Fahrrades auf einem Zweiradträger ermöglicht. Zudem soll der Zweiradträger eine unkomplizierte und leicht zu handhabende Befestigung ermöglichen, welche Beschädigungen am Fahrrad vermeidet.

Gelöst wird diese Aufgabe durch einen Zweiradträger zum Transport von zumindest einem einspurigen Zweirad, umfassend ein Grundprofil, welches vorzugsweise einen U-förmigen oder V-förmigen Querschnitt aufweist und mit einem einspurigen Zweirad, bevorzugt Fahrrad oder Elektrofahrrad, beladbar ist, einen Grundrahmen, welcher mit dem Grundprofil verbindbar ist, einen ersten Bügel, welcher an einem ersten Enden des Grundprofils angeordnet ist, einen zweiten, spannseitigen Bügel, welcher an einem zweiten Ende des Grundprofils angeordnet ist und welcher verstellbar oder schwenkbar, und ein Befestigungssystem, welches mit dem Grundrahmen verbunden ist und mit einem Fahrzeug koppelbar ist, dadurch gekennzeichnet, dass zumindest der spannseitige Bügel schwenkbar mit dem Grundprofil und einem am Grundprofil angeordneten pneumatischen Verstellelement oder elektrischen Verstellelement verbunden ist, wobei beim Einschwenken des spannseitigen Bügels das pneumatische Verstellelement oder elektrische Verstellelement derart Kraft auf den spannseitigen Bügel ausübt, dass das Fahrrad über das Grundprofil und die beiden Bügel an zumindest vier Einspannpunkten einspannbar und sicherbar ist. Bei einer solchen Einspannung wirken die Einspannpunkte auf die Fahrradreifen. Eine Sicherung des Zweirades mittels einer erfindungsgemäßen Vorrichtung sorgt dafür, dass Beschädigungen, wie beispielsweise Kratzer am Rahmen des Fahrrades und Verbiegungen von Gang- und Schaltelementen, welche beim Transport auftreten können, vermeidbar sind. Eine erfindungsgemäße Art der Sicherung benötigt außerdem keine Spanngurte der Verschraubungen, welche sich durch beim Transport auftretende Vibrationen lösen können und somit zu Beschädigungen am transportierten Fahrrad oder am Fahrzeug führen können. Außerdem ist durch das pneumatische Verstellelement oder elektrische Verstellelement ein automatisches Einschwenken des spannseitigen Bügels möglich.

Das Befestigungssystem kann eine Anhängerdeichsel umfassen. Eine Anhängerdeichsel ist mit einer Anhängerkupplung koppelbar, sodass der Zweiradträger mit einem Fahrzeug, bevorzugt Automobil, koppelbar ist. Über eine Verschweißung oder eine Verschraubung ist die Verbindung zwischen Grundrahmen und Befestigungssystem möglich.

Der Zweiradträger kann mehrere Grundprofile, bevorzugt zwei oder drei Grundprofile, umfassen, um das Beladen mit mehreren Fahrrädern zu ermöglichen. Die Länge des Grundrahmens ist dabei auf die Anzahl der Grundprofile angepasst. Die Grundprofile können ebenfalls jeweils einen ersten Bügel und einen spannseitigen Bügel, der schwenkbar mit dem Grundprofil und einem am Grundprofil angeordneten pneumatischen Verstellelement oder elektrischen Verstellelement verbunden ist, wobei beim Einschwenken des spannseitigen Bügels das pneumatische Verstellelement oder elektrischen Verstellelement derart Kraft auf den spannseitigen Bügel ausübt, dass das Fahrrad über das Grundprofil und die beiden Bügel an zumindest vier Einspannpunkten einspannbar und sicherbar ist, umfassen.

Neben Fahrräder können auch einspurige Kraftfahrzeuge, wie z.B. Motorräder, transportiert werden.

In einer bevorzugten Ausführungsform handelt es sich beim Zweiradträger daher um einen Fahrradträger.

Bevorzugt ist vorgesehen, dass das Verstellelement ein pneumatisches Verstellelement ist.

Das Grundprofil kann zumindest eine Ausnehmung aufweisen, wobei der Grundrahmen in die Ausnehmung des Grundprofils einsteckbar und damit verbindbar ist. Die Verbindung zwischen dem Grundprofil und dem Grundrahmen kann mittels Verschweißen, Verschrauben oder Verklemmen erzeugt werden, wobei das Verschweißen bevorzugt ist. Die Verbindung zwischen Grundrahmen und Grundprofil ist vorzugsweise separiert von der Verbindung zwischen Befestigungssystem und Grundrahmen.

Der Grundrahmen ist zudem vorzugsweise aus Aluminium geformt. Dies spart Gewicht bei möglichst hoher Belastbarkeit. Zudem ist ein Grundrahmen aus Aluminium langlebig und wartungsarm.

Im Vergleich zu CN 211969319 U oder WO 2020/044154 A1, ermöglicht die erfindungsgemäße Vorrichtung eine einfachere und schneller Verladung eines Zweirades. Denn bei der erfindungsgemäßen Vorrichtung entfällt der Zwischenschritt des Befestigens der Bügel. Durch das pneumatische Verstellelement oder elektrische Verstellelement üben die Bügel von sich aus eine Kraft in Richtung Fahrradreifen aus, während in CN 211969319 U oder WO 2020/044154 A1 die Bügel versuchen die Bewegungsmöglichkeiten des Fahrrades durch eine selbst gewählte Arretierungsposition zu begrenzen. Dadurch ergibt sich bei der erfindungsgemäßen Vorrichtung eine stärkere und stabilere Einspannung.

Wie zuvor bereits ausgeführt, weisen der spannseitige Bügel und das Grundprofil eine gemeinsame Schwenkachse auf, sodass der spannseitige Bügel schwenkbar am Grundprofil gelagert sein kann.

Die Bügel weisen vorzugsweise jeweils einen Anfang und ein Ende auf, wobei das Ende des spannseitigen Bügels mit dem pneumatischen Verstellelement oder elektrischen Verstellelement verbunden ist, während das Ende des festseitigen Bügels mit dem Grundprofil verbunden ist. Der Anfang des jeweiligen Bügels ist gegenüberliegend zum Ende des jeweiligen Bügels angeordnet.

In einer besonders bevorzugten Ausführungsform weist der spannseitige Bügel eine Schwenkachse auf, welche in einem Abstand zum Ende des spannseitigen Bügels angeordnet ist, wobei das pneumatische Verstellelement oder das elektrische Verstellelement mit einem Ende am Grundrahmen bzw. Grundprofil und mit einem anderen Ende am Ende des spannseitigen Bügels befestigt ist. Im Falle des pneumatischen Verstellelementes kann der spannseitige Bügel in einen langen und einen kurzen Hebel aufgeteilt werden. Der lange Hebel entspricht demjenigen Teil des spannseitigen Bügels, welcher durch den Anfang des Bügels und die Schwenkachse begrenzt ist. Der kurze Hebel entspricht demjenigen Teil des spannseitigen Bügels, welcher durch die Schwenkachse und das Ende des Bügels begrenzt ist.

Beim Ausschwenken bzw. Öffnen des spannseitigen Bügels muss der Kraft des pneumatischen Verstellelementes entgegengewirkt werden. Durch den langen Hebel sowie die Hebelwirkung kann beim Ausschwenken des spannseitigen Bügels die recht große Kraft des pneumatischen Verstellelementes leicht überwunden werden, sodass auch der Totpunkt leicht überwindbar ist. Nach dem Überschreiten des Totpunktes wird die Drehrichtung des Wirkmomentes des pneumatischen Verstellelementes geändert und das pneumatische Verstellelement drückt das Ende des spannseitigen Bügels in Richtung Grundprofil. Vorzugsweise dient das Grundprofil dann als Anschlagspunkt, sodass der spannseitige Bügel in Offenstellung gehalten wird.

Hierbei sei darauf verwiesen, dass der Totpunkt derjenigen Stellung entspricht, bei der die Verlängerungslinie des pneumatischen Verstellelementes mit der Schwenkachse des spannseitigen Bügels und dem Anfang des spannseitigen Bügels eine Gerade bildet. Anders ausgedrückt entspricht der Totpunkt einer Geraden, welche durch spannseitigen Bügel und pneumatisches Verstellelement gebildet wird. Im Totpunktes wird der spannseitige Bügel vom pneumatischen Verstellelement nicht mehr aktiv in Schließ- oder Öffnungsrichtung belastet bzw. zum Ein- oder Ausschwenken gebracht.

Im Fall des elektrischen Verstellelementes kann der spannseitige Bügel automatisch in Schließ- oder Öffnungsrichtung bewegt werden. Insbesondere durch die zuvor beschriebene Anordnung der Schwenkachse, ist die Einspannung des einspurigen Zweirades verbessert bzw. erleichtert. Mit zuvor beschriebener Anordnung der Schwenkachse ist gemeint, dass die Schwenkachse in einem Abstand zum Ende des spannseitigen Bügels angeordnet ist, wobei das elektrischen Verstellelement mit einem Ende am Grundrahmen bzw. Grundprofil und mit einem anderen Ende am Ende des spannseitigen Bügels befestigt ist.

Die beiden Bügel können über ein arretierbares System, vorzugsweise ein Ein- oder Ausrastsystem mit einem Einrastbolzen, verstellt werden. Dadurch ist es möglich den Zweiradträger anhand der unterschiedlichen Reifen- und Fahrradgrößen von Fahrrädern oder Elektrofahrrädern anzupassen. Zudem kann das arretierbare System in mindestens drei Einstellungen eingestellt werden. Diese Einstellungen können auch stufenlos sein.

In einer Ausführungsform ist der festseitige Bügel über eine lösbare Arretierung mit dem Grundprofil verbunden ist, während der spannseitige Bügel über das pneumatische Verstellelement oder das elektrische Verstellelement schwenkbar mit dem Grundprofil verbunden ist, wobei der festseitige Bügel in einem selbstgewählten Winkel zum Grundprofil arretierbar ist. Die lösbare Arretierung kann beispielsweise über ein Arretierelement, einen Bolzen, vorzugsweise Rastbolzen, einen Ratschenmechanismus oder einen hydraulischen Zylinder ermöglicht werden. Dadurch ergibt sich ein sehr einfaches Beladen des Zweiradträgers, da das Fahrrad bereits durch den arretierten festseitigen Bügel, welcher einen Teil eines Fahrradreifens umgeben kann, gehalten wird und nur noch der schwenkbare spannseitige Bügel zum Einspannen genutzt werden muss.

Der festseitige Bügel kann auch mittels einer festen Arretierung mit dem Grundprofil verbunden sein.

In einer anderen Ausführungsform sind der festseitige und spannseitige Bügel jeweils über ein pneumatisches Verstellelement oder das elektrische Verstellelement schwenkbar mit dem Grundprofil verbunden. Dadurch ist es einerseits möglich ein Fahrrad von der gewünschten Seite zu beladen. Andererseits ist die Handhabung vereinfacht, da beide Bügel automatisch einschwenkbar sind.

Die Bügel kann U-förmig ausgeformt sein, wobei die Öffnung der U-förmigen Bügel mit dem Grundprofil verbunden werden. Durch die Bügel kann eine stabile sowie kraft- und formschlüssige Einspannung, Zentrierung und Sicherung der Fahrräder ermöglicht werden. Derartige Bügel sind zudem sehr anpassungsfähig, wodurch sowohl schmale Rennradreifen als auch breitere Mountainbike-Reifen einspannbar und sicherbar sind.

Die Verbindung zwischen Bügel und Grundprofil kann kraft- und formschlüssig sein.

In einer Ausführungsform sind mehrere Halterungen, bestehend aus Grundprofil, festseitigem Bügel und spannseitigem Bügel, parallel zueinander angeordnet und mit dem Befestigungssystem verbunden. Dadurch ist es möglich mehrere Zweiräder mit einem Zweiradträger zu transportieren.

In einer bevorzugten Ausführungsform umfasst das pneumatische Verstellelement eine pneumatische Feder oder Gasdruckfeder.

Das elektrische Verstellelement kann beispielsweise eine elektrische Gasfeder oder elektrische Gasdruckfeder umfassen.

Es können zwei Führungsbügel am Grundprofil angeordnet und damit montierbar sein. Die Führungsbügel sorgen für eine zusätzliche Sicherung des Fahrrades. Außerdem ergeben sich weitere Einspannpunkte durch die Führungsbügel, da die Führungsbügel die Fahrradreifen einklemmen können.

Die Erfindung betrifft außerdem ein Verfahren zur Sicherung eines einspurigen Zweirade, bevorzugt ein Fahrrad oder ein Elektrofahrrad, auf einem erfindungsgemäßen Zweiradträger, umfassend die Schritte
a) einen verstellbaren spannseitigen Bügel, welcher an einem Grundprofil montiert ist, derart ausschwenken, dass der untere Totpunkt des pneumatischen Verstellelementes, bevorzugt der pneumatischen Feder oder Gasdruckfeder, erreicht ist und der spannseitige Bügel am unteren Totpunkt einrastet,
b) den Zweiradträger mit einem Fahrrad oder Elektrofahrrad beladen, wobei das Fahrrad bis zum Kontakt mit einem festseitigen Bügel, welcher gegenüberliegend von dem spannseitigen Bügel an dem Grundprofil montiert ist, auf den Zweiradträger geschoben wird, und
c) einen kurzen Impuls auf den spannseitigen Bügel geben, sodass das pneumatische Verstellelement den spannseitigen Bügel in Richtung Fahrradreifen bewegt und in weiterer Folge eine derartige Kraft auf das Fahrrad ausübt, dass die beiden Fahrradreifen in dem Grundprofil und den beiden Bügel gesichert und eingespannt sind.

In einer bevorzugten Ausführungsform rastet der spannseitige Bügel am unteren Totpunkt dadurch ein, dass der spannseitige Bügel eine Schwenkachse aufweist, welche in einem Abstand zum Ende des spannseitigen Bügels angeordnet ist, wobei das pneumatische Verstellelement mit einem Ende am Grundrahmen bzw. Grundprofil und mit einem anderen Ende am Ende des spannseitigen Bügels befestigt ist. Dementsprechend kann der spannseitige Bügel in einen langen und einen kurzen Hebel aufgeteilt werden. Der lange Hebel entspricht demjenigen Teil des spannseitigen Bügels, welcher durch den Anfang des Bügels und die Schwenkachse begrenzt ist. Der kurze Hebel entspricht demjenigen Teil des spannseitigen Bügels, welcher durch die Schwenkachse und das Ende des Bügels begrenzt ist.

Beim Ausschwenken bzw. Öffnen des spannseitigen Bügels muss der Kraft des pneumatischen Verstellelementes entgegengewirkt werden. Durch den langen Hebel sowie die Hebelwirkung kann beim Ausschwenken des spannseitigen Bügels die recht große Kraft des pneumatischen Verstellelementes leicht überwunden werden, sodass auch der Totpunkt leicht überwindbar ist. Nach dem Überschreiten des Totpunktes wird die Drehrichtung des Wirkmomentes des pneumatischen Verstellelementes geändert und das pneumatische Verstellelement drückt das Ende des spannseitigen Bügels in Richtung Grundprofil. Vorzugsweise dient das Grundprofil dann als Anschlagspunkt, sodass der spannseitige Bügel in Offenstellung gehalten wird.

Der untere Totpunkt des pneumatischen Verstellelementes, vorzugsweise der Gasdruckfeder, markiert denjenigen Punkt, an dem die maximale Kompression des Gases erreicht ist und der Gasdruck am höchsten ist. Alternativ ausgedrückt entspricht der Totpunkt derjenigen Stellung, bei der die Verlängerungslinie des pneumatischen Verstellelementes mit der Schwenkachse des spannseitigen Bügels und dem Anfang des spannseitigen Bügels eine Gerade bildet. Im Totpunktes wird der spannseitige Bügel vom pneumatischen Verstellelement nicht mehr aktiv in Schließ- oder Öffnungsrichtung belastet bzw. zum Ein- oder Ausschwenken gebracht.

### DETAILLIERTE BESCHREIBUNG DER ERFINDUNG

Weitere Vorteile und Details der Erfindung werden nachfolgend anhand der folgenden Figuren und Figurenbeschreibung erläutert.
- Fig. 1: zeigt die Mechanik eines erfindungsgemäßen Zweiradträgers mit einem verstellbaren Bügel in geöffnetem Zustand bzw. geöffneter Stellung.
- Fig. 2: stellt eine Vorderansicht eines erfindungsgemäßen Zweiradträgers dar in gespanntem Zustand bzw. Stellung, mit min. drei verschiedenen Verstellmöglichkeiten des festseitigen Bügels.
- Fig. 3a, b: zeigen eine Vorderansicht und Seitenansichten der Krafteinwirkung der Gasdruckfeder auf die Einspannpunkte eines Fahrrades in einem erfindungsgemäßen Zweiradträger.
- Fig. 4: illustriert eine Detailansicht des Grundprofils.

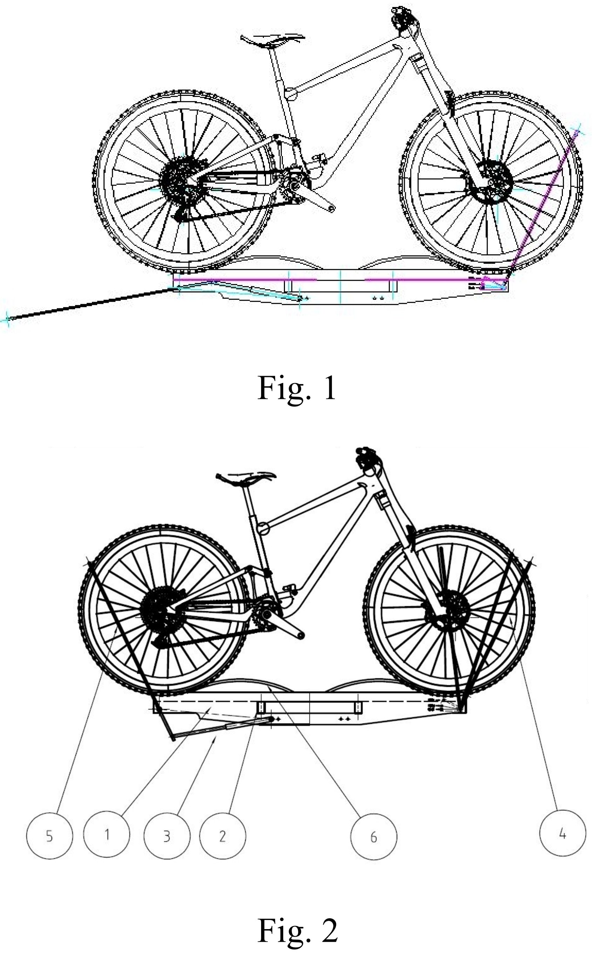

In Fig. 1 ist die Mechanik eines erfindungsgemäßen Zweiradträgers gezeigt. Der Zweiradträger ist dabei in der Vorderansicht dargestellt und umfasst einen Grundrahmen 2, bevorzugt aus Aluminium, ein Grundprofil 1, einen ersten - hier festseitigen - Bügel 4 und einen spannseitigen Bügel 5. Das Grundprofil 1 weist eine Ausnehmung auf. In diese Ausnehmung ist der Grundrahmen 2 einsteckbar und damit verbindbar ist. Die Verbindung zwischen dem Grundprofil 1 und dem Grundrahmen 2 ist hierbei über eine Verschweißung ermöglicht. Die beiden Bügel 4, 5 sind an gegenüberliegenden Enden vom Grundprofil 1 montiert. Der erste, festseitige Bügel 4 ist an einem ersten Ende des Grundprofils 1 in einem bestimmten Winkel zum Grundprofil 1 arretiert, während der spannseitige Bügel 5 mit einem zweiten Ende des Grundprofils 1 schwenkbar verbunden ist. Damit der spannseitige Bügel 5 und das Grundprofil 1 schwenkbar miteinander verbunden sind, weisen beide eine gemeinsame Schwenkachse auf.

Außerdem weisen die beiden Bügel 4, 5 jeweils einen Anfang und ein Ende auf, wobei das Ende des festseitigen Bügels 4 mit dem Grundprofil 1 verbunden ist, während das Ende des spannseitigen Bügels 5 mit einem pneumatischen Verstellelement 3 verbunden ist. Neben dem pneumatischen Verstellelement 3 kann das Ende des spannseitigen Bügels 5 auch mit einem elektrischen Verstellelement, beispielsweise einer elektrischen Gasfeder oder elektrischen Gasdruckfeder, verbunden sein. Folglich ist die Schwenkachse in einem Abstand zum Ende des spannseitigen Bügels 5 angeordnet. Der Anfang des jeweiligen Bügels 4, 5 ist gegenüberliegend zum Ende des jeweiligen Bügels 4, 5 angeordnet.

Der Winkel zwischen festseitigem Bügel 4 und Grundprofil 1 ist über eine arretierbares System, bevorzugt ein arretierbares Ein- und Ausschubsystem mit Einrastbolzen, einstellbar, wobei mindestens drei verschiedene Winkeleinstellungen möglich sind. Der schwenkbare spannseitige Bügel 5 ist auch in einem bestimmten Winkel zum Grundprofil 1 montiert.

Diese Montierung ist analog zum festseitigen Bügel 4, sodass über ein arretierbares System zumindest drei Winkeleinstellungen möglich sind. Zusätzlich ist der spannseitige Bügel 5 mit dem pneumatischen Verstellelement 3, vorzugsweise einer Gasdruckfeder, oder elektrischen Verstellelement verbunden. Im speziellen ist das Ende des spannseitigen Bügels 5 mit dem pneumatischen Verstellelement 3 oder elektrischen Verstellelement verbunden. Das pneumatische Verstellelement 3 oder elektrische Verstellelement ist dabei derart mit dem Grundprofil 1 und dem spannseitigen Bügel 5 verbunden, dass beim Ausschwenken des spannseitigen Bügels 5, der untere Totpunkt des pneumatischen Verstellelementes 3 minimal überschreitbar ist. Beim minimalen Überschreiten dieses unteren Totpunktes ist eine automatische Arretierung des pneumatischen Verstellelementes 3 erreichbar.

Damit das Überschreiten des Totpunktes möglich ist, ist die Schwenkachse in einem Abstand zum Ende des spannseitigen Bügels 5 angeordnet. Hierbei ist das pneumatische Vertsellelement 3 mit einem Ende am Grundprofil 1 bzw. Grundrahmen 2 und mit einem anderen Ende am Ende des spannseitigen Bügels 5 befestigt. Dementsprechend kann der spannseitige Bügel 5 in einen langen und einen kurzen Hebel aufgeteilt werden. Der lange Hebel entspricht demjenigen Teil des spannseitigen Bügels 5, welcher durch den Anfang des spannseitigen Bügels 5 und die Schwenkachse begrenzt ist. Der kurze Hebel entspricht demjenigen Teil des spannseitigen Bügels 5, welcher durch die Schwenkachse und das Ende des spannseitigen Bügels 5 begrenzt ist.

Beim Ausschwenken bzw. Öffnen des spannseitigen Bügels 5 muss der Kraft des pneumatischen Verstellelementes 3 entgegengewirkt werden. Durch den langen Hebel sowie die Hebelwirkung kann beim Ausschwenken des spannseitigen Bügels 5 die recht große Kraft des pneumatischen Verstellelementes 3 leicht überwunden werden, sodass auch der Totpunkt leicht überwindbar ist. Nach dem Überschreiten des Totpunktes wird die Drehrichtung des Wirkmomentes des pneumatischen Verstellelementes 3 geändert und das pneumatische Verstellelement 3 drückt das Ende des spannseitigen Bügels 5 in Richtung Grundprofil 1. Hierbei dient vorzugsweise das Grundprofil 1 dann als Anschlagspunkt, sodass der spannseitige Bügel 5 in Offenstellung gehalten wird.

Hierbei sei darauf verwiesen, dass der Totpunkt derjenigen Stellung entspricht, bei der die Verlängerungslinie des pneumatischen Verstellelementes 3 mit der Schwenkachse des spannseitigen Bügels 5 und dem Anfang des spannseitigen Bügels 5 eine Gerade bildet. Anders ausgedrückt entspricht der Totpunkt einer Geraden, welche durch spannseitigen Bügel 5 und pneumatisches Verstellelement 3 gebildet wird. Im Totpunktes wird der spannseitige Bügel 5 vom pneumatischen Verstellelement 3 nicht mehr aktiv in Schließ- oder Öffnungsrichtung belastet bzw. zum Ein- oder Ausschwenken gebracht.

Im Fall des elektrischen Verstellelementes kann der spannseitige Bügel 5 automatisch in Schließ- oder Öffnungsrichtung bewegt werden. Hierbei ist vor allem die Anordnung der Schwenkachse, welche in einem Abstand zum Ende des spannseitigen Bügels angeordnet ist, wobei das elektrischen Verstellelement mit einem Ende am Grundrahmen bzw. Grundprofil und mit einem anderen Ende am Ende des spannseitigen Bügels befestigt ist, vorteilhaft. Vorteilhafterweise verbessert bzw. erleichtert diese Anordnung die Einspannung des einspurigen Zweirades.

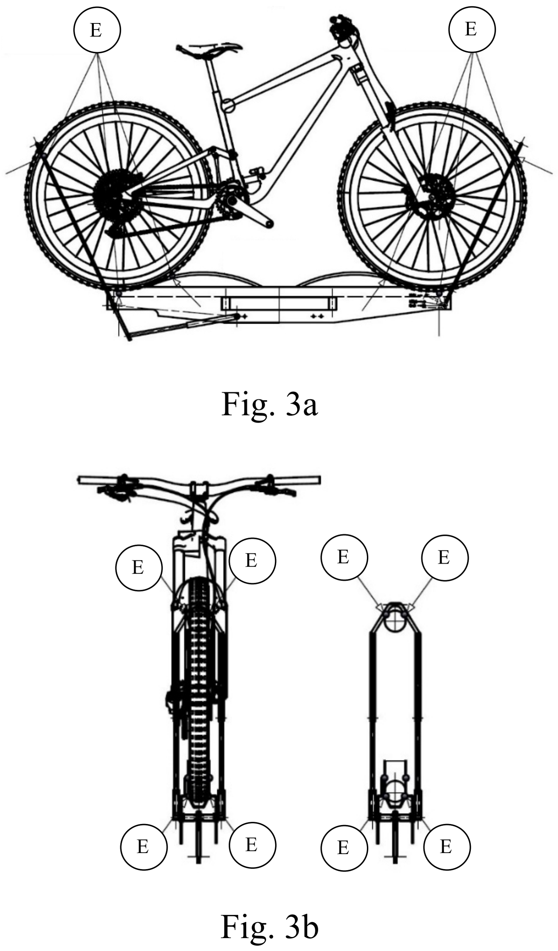

In diesem arretierbaren ausgeschwenkten Zustand des spannseitigen Bügels 5 ist die Be- und Entladung von Fahrrädern vereinfacht. Wird der Zweiradträger nun mit einem Fahrrad beladen, so steht am Ende des Beladevorgangs ein erster Reifen des Fahrrades mit dem festseitigen Bügel 4 und einem Grundprofil 1 in Kontakt. Der festseitige Bügel 4 umgibt dabei einen Teil des ersten Reifens. Im Gegensatz dazu steht ein zweiter Reifen des Fahrrades lediglich mit dem Grundprofil 1 in Kontakt, da der spannseitige Bügel 5 ausgeschwenkt ist. Da das pneumatischen Verstellelement 3 lediglich minimal den unteren Totpunkt überschreitet, ist der spannseitige Bügel 5 mittels einer geringen initialen Kraftausübung in Richtung Fahrrad bzw. zweiten Reifen einschwenkbar. Beim Einschwenken überträgt das pneumatischen Verstellelement 3 eine Kraft auf den spannseitigen Bügel 5 und bewegt diesen somit automatisch bis hin zum zweiten Reifen des Fahrrades. In diesem eingeschwenkten Zustand umgibt der spannseitige Bügel 5 einen Teil des zweiten Reifens. Ein solcher Zustand mit eingeschwenktem spannseitigem Bügel ist in Fig. 2, 3a und 3b gezeigt. Der Zweiradträger kann zudem vier Führungsbügel 6 umfassen, welche mit dem Grundprofil 1 verbunden sind und für eine zusätzliche Sicherung des Fahrrades dienen.

Fig. 2 stellt einen erfindungsgemäßen Zweiradträger dar, welcher mit einem Fahrrad beladen ist und dessen Bügel 4, 5 eingeschwenkt sind. Die Bügel 4, 5 umgeben dabei Teile des jeweiligen Reifen. Durch eine lösbare Arretierung zwischen festseitigem Bügel 4 und Grundprofil 1, ist der Winkel zwischen festseitigem Bügel 4 und Grundprofil 1 entsprechend dem aufgeladenen oder aufzuladenden Fahrrad verstellbar. Sobald die gewünschte Verstellung eingestellt ist, wird der festseitige Bügel 4 in dem gewünschten Winkel zum Grundprofil 1 mittels eines Bolzens, vorzugsweise Rastbolzen, arretiert. Somit ist es möglich unterschiedliche Fahrradgrößen, Modelle und Typen auf den Zweiradträger aufzuladen.

Einen erfindungsgemäßen Zweiradträger mit beladenem Fahrrad und eingeschwenkten Bügeln 4, 5 sind auch in Fig. 3a, 3b illustriert. Fig. 3a und 3b zeigen die formschlüssigen Einspannpunkte E des Fahrrades, welche sich durch die Krafteinwirkung des pneumatischen Verstellelementes 3 oder elektrischen Verstellelementes auf die Reifen des Fahrrades ergeben. Genauer gesagt handelt es sich hierbei um die Einspannpunkte E zwischen den Bügeln 4, 5 und den Reifen des Fahrrades sowie dem Grundprofil 1 und den Reifen des Fahrrades.

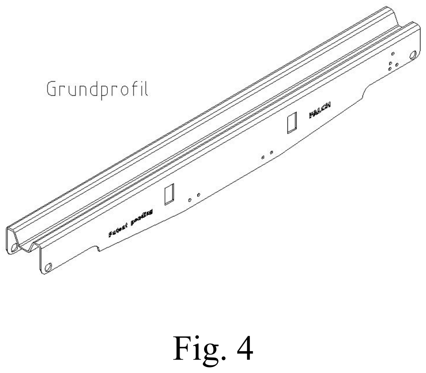

Fig. 4 zeigt eine Detailansicht des Grundprofils 1. Das Grundprofil ist dabei vorzugsweise U-förmig oder V-förmig ausgeformt und weist Ausnehmungen für den Grundrahmen 2 sowie der Befestigung der Bügel 4, 5 auf.

## Patentansprüche

1. Zweiradträger zum Transport von zumindest einem einspurigen Zweirad, umfassend
ein Grundprofil (1), welches vorzugsweise einen U-förmigen oder V-förmigen Querschnitt aufweist und mit einem einspurigen Zweirad, bevorzugt Fahrrad oder Elektrofahrrad, beladbar ist,
einen Grundrahmen (2), welcher mit dem Grundprofil (1) verbindbar ist,
einen ersten Bügel (4), welcher an einem ersten Enden des Grundprofils (1) angeordnet ist,
einen zweiten, spannseitigen Bügel (5), welcher an einem zweiten Ende des Grundprofils (1) angeordnet ist und welcher verstellbar oder schwenkbar, und
ein Befestigungssystem, welches mit dem Grundrahmen (2) verbunden ist und mit einem Fahrzeug koppelbar ist,
**dadurch gekennzeichnet, dass** zumindest der spannseitige Bügel (5) schwenkbar mit dem Grundprofil (1) und einem am Grundprofil (1) angeordneten pneumatischen Verstellelement (3) oder elektrischen Verstellelement verbunden ist, wobei beim Einschwenken des spannseitigen Bügels (5) das pneumatische Verstellelement (3) oder elektrische Verstellelement derart Kraft auf den spannseitigen Bügel (5) ausübt, dass das Fahrrad über das Grundprofil (1) und die beiden Bügel (4, 5) an zumindest vier Einspannpunkten einspannbar und sicherbar ist.

2. Zweiradträger nach Anspruch 1, **dadurch gekennzeichnet, dass** der Zweiradträger ein Fahrradträger ist.

3. Zweiradträger nach Anspruch 1 oder 2, **dadurch gekennzeichnet, dass** der spannseitige Bügel (5) eine Schwenkachse aufweist, welche in einem Abstand zum Ende des spannseitigen Bügels (5) angeordnet ist, wobei das pneumatische Verstellelement (3) oder elektrische Verstellement mit einem Ende am Grundrahmen (2) und mit dem anderen Ende am Ende des spannseitigen Bügels (5) befestigt ist.

4. Zweiradträger nach einem der Ansprüche 1 bis 3, **dadurch gekennzeichnet, dass** die Bügel (4, 5) über ein arretierbares System, vorzugsweise ein Ein- oder Ausrastsystem mit einem Einrastbolzen, verstellbar sind.

5. Zweiradträger nach Anspruch 4, **dadurch gekennzeichnet, dass** das arretierbare System in zumindest drei Einstellungen oder Winkeleinstellungen zwischen Bügel (4, 5) und Grundprofil (1) einstellbar ist.

6. Zweiradträger nach einem der Ansprüche 1 bis 5, **dadurch gekennzeichnet, dass** der erste Bügel (4) über eine lösbare Arretierung mit dem Grundprofil (1) verbunden ist, während der spannseitige Bügel (5) über das pneumatische Verstellelement (3) schwenkbar mit dem Grundprofil (1) verbunden ist, wobei der zweite Bügel (4) in einem wählbaren Winkel zum Grundprofil (1) arretierbar ist.

7. Zweiradträger nach einem der Ansprüche 1 bis 6, **dadurch gekennzeichnet, dass** die Bügel (4, 5) U-förmig ausgeformt sind und die Öffnung der U-förmigen Bügel (4, 5) mit dem Grundprofil (1) verbunden sind.

8. Zweiradträger nach einem der Ansprüche 1 bis 7, **dadurch gekennzeichnet, dass** die Verbindung zwischen Bügel (4, 5) und Grundprofil (1) kraft- und formschlüssig ist.

9. Zweiradträger nach einem der Ansprüche 1 bis 8, **dadurch gekennzeichnet, dass** mehrere Halterungen, bestehend aus Grundprofil (1), festseitigem Bügel (4) und spannseitigem Bügel (5), parallel zueinander angeordnet und mit dem Befestigungssystem verbunden sind.

10. Zweiradträger nach einem der Ansprüche 1 bis 9, **dadurch gekennzeichnet, dass** das pneumatische Verstellelement (3) eine pneumatische Feder oder Gasdruckfeder umfasst.

11. Zweiradträger nach einem der Ansprüche 1 bis 10, **dadurch gekennzeichnet, dass** der erste und der zweite Bügel (4, 5) jeweils über ein pneumatisches Verstellelement (3) schwenkbar mit dem Grundprofil (1) verbunden sind.

12. Zweiradträger nach einem der Ansprüche 1 bis 10, **dadurch gekennzeichnet, dass** der erste Bügel ein festseitiger Bügel (4) ist.

13. Zweiradträger nach einem der Ansprüche 1 bis 12, **dadurch gekennzeichnet, dass** zwei Führungsbügel (6) am Grundprofil (1) angeordnet sind und damit montierbar sind.

14. Verfahren zur Sicherung eines einspurigen Zweirades, bevorzugt ein Fahrrad oder ein Elektrofahrrad, auf einem Zweiradträger nach einem der Ansprüche 1 bis 13, umfassend die Schritte
a) einen verstellbaren spannseitigen Bügel (5), welcher an einem Grundprofil (1) montiert ist, derart ausschwenken, dass der untere Totpunkt des pneumatischen Verstellelementes (3), bevorzugt der pneumatischen Feder oder Gasdruckfeder, erreicht ist und der spannseitige Bügel (5) am unteren Totpunkt einrastet,
b) den Zweiradträger mit einem Fahrrad oder Elektrofahrrad beladen, wobei das Fahrrad bis zum Kontakt mit einem festseitigen Bügel (4), welcher gegenüberliegend von dem spannseitigen Bügel (5) an dem Grundprofil (1) montiert ist, auf den Zweiradträger geschoben wird, und
c) einen kurzen Impuls auf den spannseitigen Bügel geben, sodass das pneumatische Verstellelement (3) den spannseitigen Bügel (5) in Richtung Fahrradreifen bewegt und in weiterer Folge eine derartige Kraft auf das Fahrrad ausübt, dass die beiden Fahrradreifen in dem Grundprofil (1) und den beiden Bügel (4, 5) gesichert und eingespannt sind.

15. Verfahren nach Anspruch 14, **dadurch gekennzeichnet, dass** der spannseitige Bügel (5) am unteren Totpunkt dadurch einrastet, dass der spannseitige Bügel (5) eine Schwenkachse aufweist, welche in einem Abstand zum Ende des spannseitigen Bügels (5) angeordnet ist, wobei das pneumatische Verstellelement (3) mit einem Ende am Grundrahmen (2) bzw. Grundprofil (1) und mit einem anderen Ende am Ende des spannseitigen Bügels (5) befestigt ist.
